# EUROPÄISCHE PATENTSCHRIFT

(11) **EP 1 099 616 B1**
(45) Veröffentlichungstag und Bekanntmachung des Hinweises auf die Patenterteilung: **27.07.2005**
(21) Anmeldenummer: 00120062.5
(22) Anmeldetag: 15.09.2000
(51) Int. Cl.: B62D 25/20, B62D 21/10, B62D 27/04

(54) **Fahrzeugboden mit Längs- und Querträgern**
Vehicle floor with longitudinal and transversal beams
Plancher de véhicule avec poutres longitudinales et transversales

(30) Priorität: 11.11.1999 DE 19954296
(43) Veröffentlichungstag der Anmeldung: 16.05.2001
(73) Patentinhaber: Dr.Ing. h.c.F. Porsche Aktiengesellschaft, 70435 Stuttgart (DE)
(72) Erfinder: Funk, Michael, 71229 Leonberg (DE); Klamser, Herbert, 71120 Grafenau (DE); Lehmann, Peter, 70193 Stuttgart (DE); Burgers, Christiaan, 71296 Heimsheim (DE)

(56) Entgegenhaltungen:
- EP-A- 0 799 757
- EP-A- 1 099 584
- DE-A- 19 528 874
- GB-A- 526 838
- US-A- 5 671 968
- US-A- 5 934 746
- PATENT ABSTRACTS OF JAPAN vol. 007, no. 055 (M-198), 5. März 1983 (1983-03-05) & JP 57 201777 A (TOYOTA JIDOSHA KOGYO KK), 10. Dezember 1982 (1982-12-10)
- PATENT ABSTRACTS OF JAPAN vol. 013, no. 193 (M-822), 9. Mai 1989 (1989-05-09) & JP 01 018784 A (MAZDA MOTOR CORP), 23. Januar 1989 (1989-01-23)

## Beschreibung

Die Erfindung bezieht sich auf ein Fahrzeug mit wenigstens einer aus Längs- und Querträgern sowie einem Mitteltunnel und Seitenschwellern bestehenden Plattform.

Aus der DE 42 33 832 A1 ist eine Bodenkonstruktion eines Fahrzeugs mit Längs- und Querträgern sowie einem Mitteltunnel bekannt. Mit diesem ist ein Querträger verbunden, der am Seitenschweller und am Mitteltunnel befestigt ist, wobei dieser über innere Versteifungen verstärkt ist.

Aufgabe der Erfindung ist es, ein Fahrzeug mit einem Sitzquerträger in einer Plattform zu schaffen, der stabil ausgeführt ist aber ein optimales Verformungs- bzw. Biegeverhalten bei einem Seitenaufprall gewährleistet.

Diese Aufgabe wird erfindungsgemäß durch die Merkmale des Anspruchs 1 und 6 gelöst. Weitere vorteilhafte Merkmale beinhalten die Unteransprüche.

Die mit der Erfindung hauptsächlich erzielten Vorteile bestehen darin, daß durch eine Trennung des Sitzquerträgers im Bereich des Mitteltunnels in zwei Teilquerträger eine abgestimmte Verform- bzw. Biegbarkeit der Plattform in diesem Bereich stattfinden kann, ohne daß die dem Seitenaufprall gegenüberliegende Seite der Plattform wesentlich verformt wird.

Hierzu ist der Sitzquerträger der Plattform in zwei Teilquerträger aufgetrennt, wobei zumindestens jeder Teilträger endseitig am Längsträger befestigt ist. Im Bereich des Mitteltunnels werden die Teilquerträger einerseits über mindestens ein Verbindungselement und andererseits über den Mitteltunnel miteinander verbunden. Das Verbindungselement kann plattenförmig oder profilförmig ausgeführt sein und an einer Unterseite der Teilquerträger angeordnet werden, wobei eine Befestigung der freien gegenüberstehenden Enden der Teilquerträger mit dem Verbindungselement über Schraubmittel oder anderen Verbindungsmitteln erfolgen kann.

Das Verbindungselement trägt eine Konsole für ein Lager einer Antriebswelle, die in einem Freiraum zwischen den Teilquerträgern im Mitteltunnel angeordnet ist. Hierdurch kann in einfacher Weise die Verbindungsplatte mit der Konsole vormontiert, um danach mit den Teilquerträgern verbunden werden. Des weiteren ist eine Demontage durch Lösen des Verbindungselements leichter möglich, als wenn der gesamte Tunnel abzubauen ist.

Zur Verstärkung des aufgetrennten Sitzquerträgers im Verbindungsbereich der beiden Teilquerträger sind aufrecht stehende profilierte Verstärkungsbleche vorgesehen. Diese Verstärkungsbleche sind jeweils mit den Teilquerträgern und dem Verbindungselement verbunden, wobei die Verstärkungsbleche über fußseitige Abstellungen mit den Teilquerträgern sowie mit ihrem abgewinkelten aufrechten Schenkeln an einem Tunnelprofil befestigbar sind.

Das Verbindungselement ist an der Unterseite der Teilquerträger angeordnet und über Befestigungsmittel, wie beispielsweise Schrauben mit diesen derart verbunden, daß zwischen den beiden Teilquerträgern ein gezielter Verformungs- bzw. Biegebereich für einen Seitenaufprall gebildet wird, damit der dem Seitenaufprall gegenüberliegende Bereich der Plattform nicht oder nur unwesentlich verformt wird und zumindest die Lagerkonsole weitestgehend unbeschädigt bleibt. Durch die Deformation des Verbindungselementes wird zusätzlich Energie absorbiert.

Zur Erzielung einer örtlich vorgegebenen Verbiegungs- oder Verformungszone des Teilquerträgers im Befestigungsbereich zum Verbindungselement ist der Sitzquerträger jeweils mit seinem einen äußeren Ende am Längsträger befestigt und zwischen diesem und einem inneren Schwellerteil ist der Querträger fortgeführt und mit dem Schwellerteil ist ein Stützbock verbunden, der stirnseitig zum Sitzquerträger angeordnet ist und einem längsverlaufenden Stützrohr im Schweller der Aufbaustruktur unmittelbar gegenübersteht. Durch diese Anordnung des Stützbocks zum Stützrohr und zur Stirnseite des Sitzquerträgers wird in diesem Bereich insbesondere ein Schutz der Personen erzielt. Bei einem Seitenaufprall wird sowohl zwischen den Teilquerträgern und dem Verbindungselement als auch zwischen den Verstärkungsblechen und den Konsolen eine formschlüssige Verbindung geschaffen.

Ein Ausführungbeispiel der Erfindung ist in den Zeichnungen dargestellt und wird im Folgenden näher beschreiben.

Es zeigen
- Fig. 1: eine Ansicht von unten auf eine Plattform mit seitlichen Längsträgern und inneren Schwellern und Stützrohren, sowie einem Mitteltunnel und einer Sitzquerträger mit Verbindungselement.
- Fig. 2: eine vergrößerte Darstellung des Verbindungselements zwischen den Teilquerträgern
- Fig. 3: einen Querschnitt durch den Sitzquerträger mit Mitteltunnel, Verbindungselement und Lagerkonsole,
- Fig. 4: eine schaubildliche Darstellung des Sitzquerträgers mit Verbindungselement, Verstärkungsblech und Lagerkonsole,

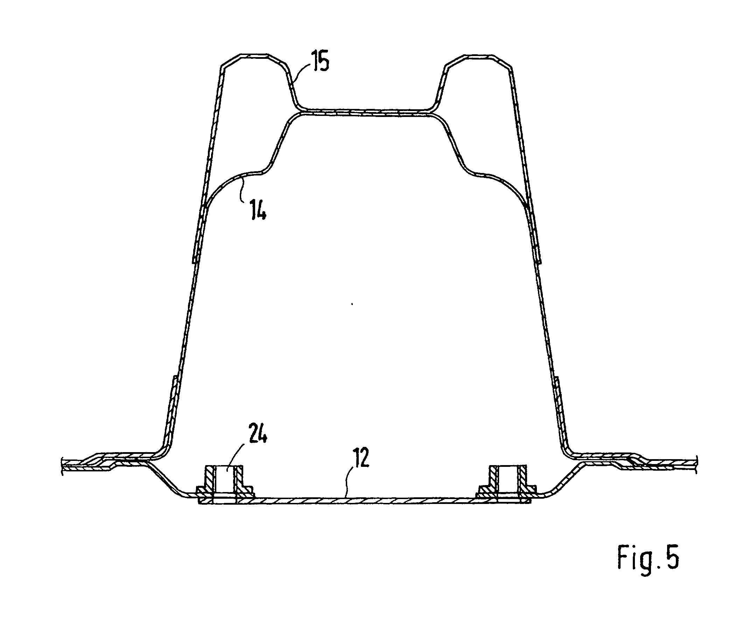

- Fig. 5: einen Schnitt nach der Linie V-V der Fig. 4, wobei der Mitteltunnel in Fig. 4 nicht dargestellt ist.

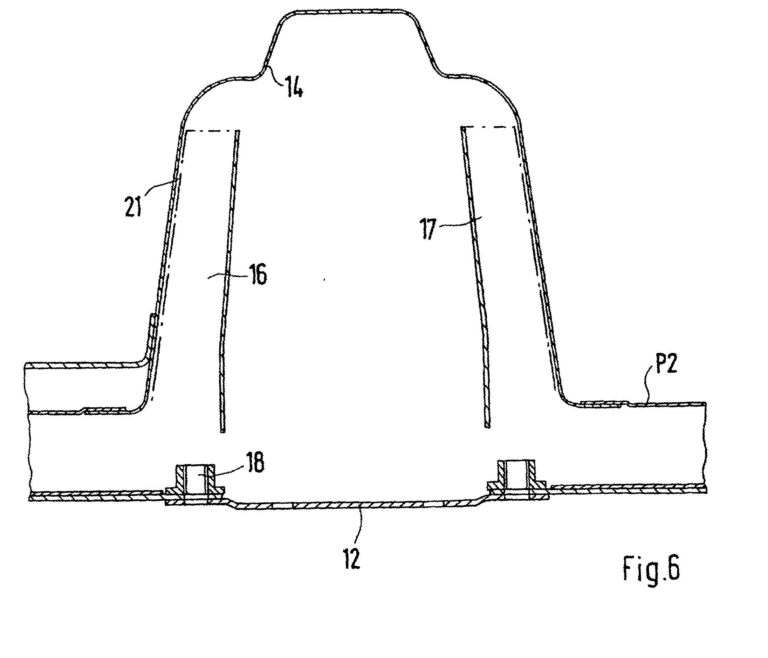

- Fig. 6: einen Schnitt nach der Linie IV-IV der Fig. 4, wobei der Mitteltunnel in Fig. 4 nicht dargestellt ist und
- Fig. 7: eine schaubildliche Darstellung eines Teilquerträgers des Sitzquerträgers mit Verbindung des Verstärkungsbleches.

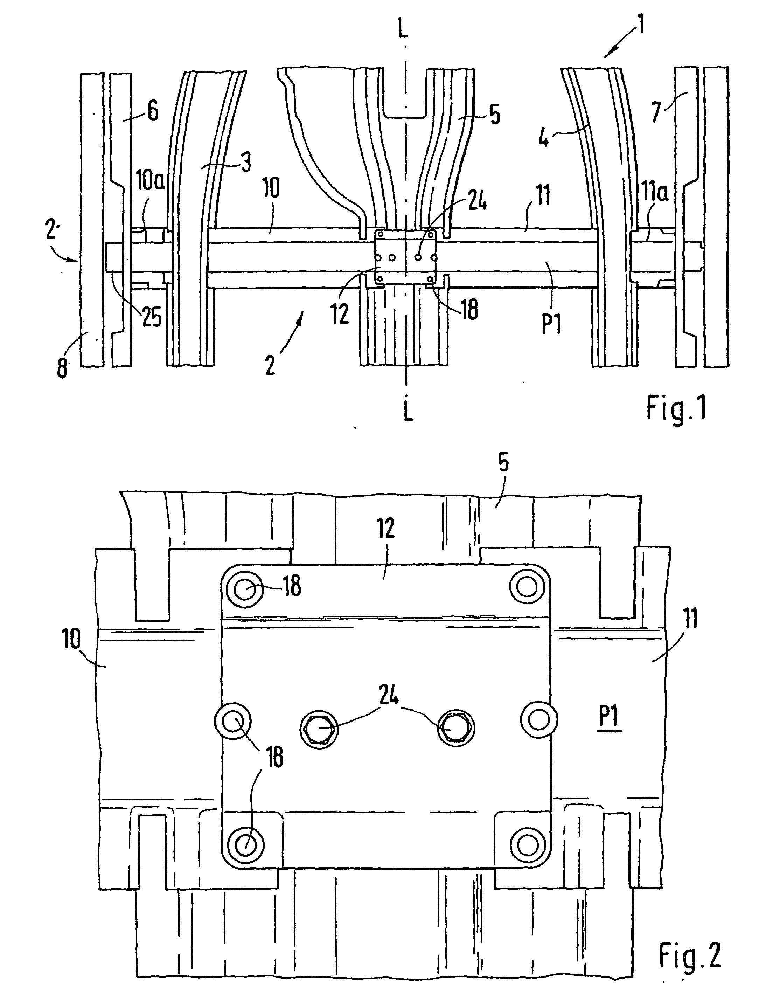

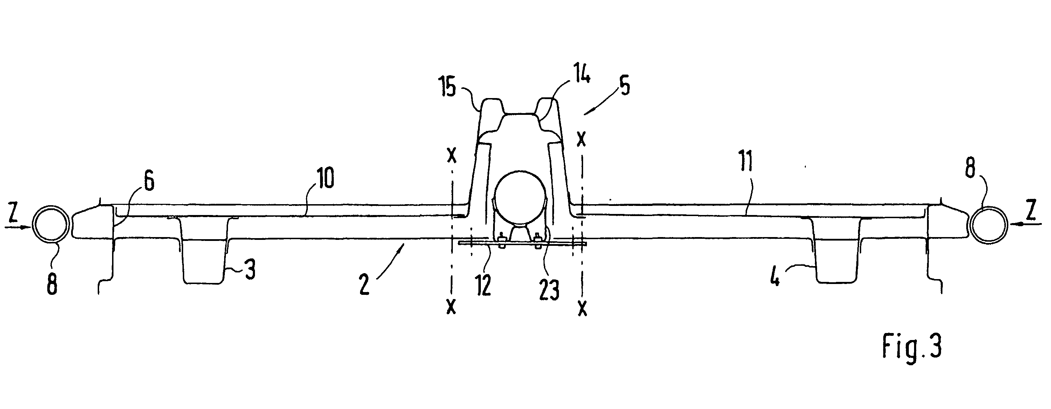

In Fig. 1 ist in Verbindung mit Fig. 3 eine Plattform 1 eines Fahrzeugs dargestellt, von welcher nur der mittlere Abschnitt im Bereich eines Sitzquerträgers 2 gezeigt ist. Die Plattform 1 umfaßt im wesentlichen zwei Längsträger 3, 4 einen Mitteltunnel 5 sowie zwei innere Schweller 6 und 7. Neben diesen Schwellern 6 und 7 ist außenseitig jeweils ein längsverlaufendes Stützrohr 8 im Schweller von Seitenteilen des Fahrzeugaufbaus gelagert, was nicht näher dargestellt ist.

Der Sitzquerträger 2 besteht im wesentlichen aus zwei Teilquerträgern 10, 11, die etwa in der Fahrzeuglängsmittelachse L-L unterteilt sind und einen Abstand a zueinander aufweisen durch ein Verbindungselements 12 sind diese Träger 10, 11 unterseitig miteinander verbunden sind. Das Verbindungselemente 12 kann plattenförmig oder profilförmig ausgeführt sein. Des weiteren sind die Teilquerträger 10, 11 über den Mitteltunnel 5 gehalten der zwei Profilelemente 14 und 15 umfassen kann und eine Aussteifung in diesen Verbindungsbereichen erfolgt über zwei Verstärkungsbleche 16, 17.

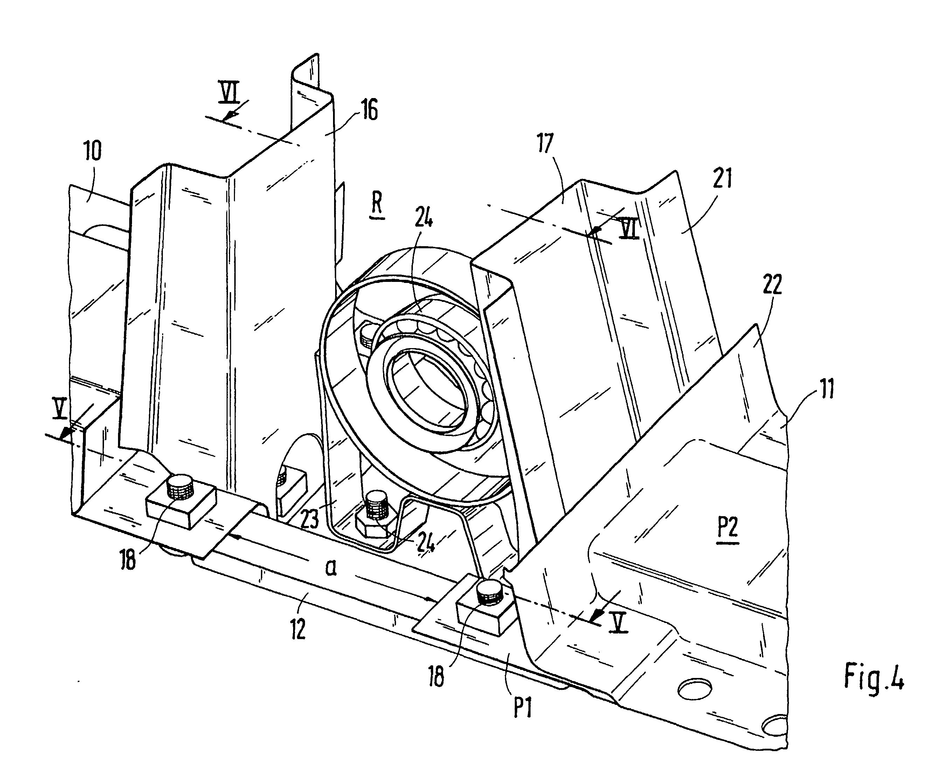

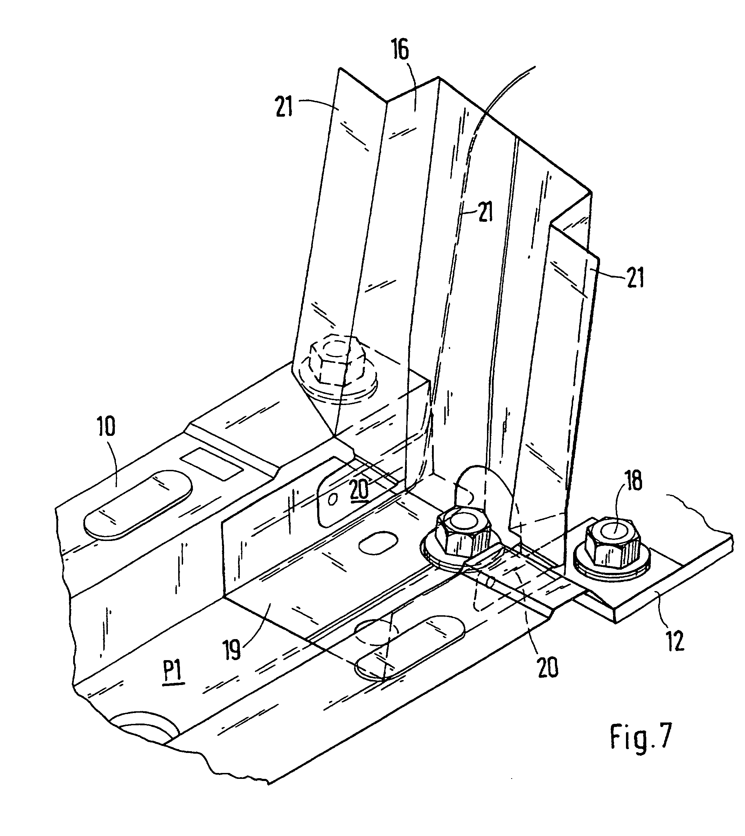

Die Teilquerträger 10, 11 bestehen aus zwei Profile P1, P2, welche insgesamt den Sitzquerträger 2 darstellen. Sie sind an sich gegenüberstehenden Enden mittels Schraubmittel 18 über das Verbindungselement 12 miteinander verbunden. Wie Fig. 4 in Zusammenhang mit Fig. 7 näher zeigt, sind die unteren Profilträger P1 der Teilquerträger 10, 11 mit den Verstärkungsblechen 16, 17 verbunden, die aufragend angeordnet sind und fußseitig Abstellungen 19, 20 aufweisen, welche an den Teilquerträgern 10, 11 beispielsweise über eine Punktschweißung befestigbar sind. Die eine Abstellung 19 ist im Querschnitt u-profilförmig ausgeführt und bildet eine abgewinkelte Verlängerung des Profilgrundkörpers, wobei die weitere Abstellung 20 eine Verlängerung der Schenkel des Profilgrundkörpers bildet.

Die Verstärkungsbleche 16, 17 weisen nach außen gerichtete, abgewinkelte Schenkel 21 auf, die mit dem Mitteltunnelprofil 14, sowie mit dem oberen Profil P2 des Teilquerträgers 10, 11, das zu diesem Zweck endseitig eine hochgestellte Abkantung 22 aufweist, verbunden.

Auf dem Verbindungselement 12 ist eine Konsole 23 für ein Lager 24 einer Antriebswelle gehalten. Diese Konsole 23 ist über Schraubmittel 24 am Verbindungselement 12 festgelegt. Seitlich umgrenzt wird die Konsole 23 von den Verstärkungsblechen 16, 17.

Wie in Fig. 1 näher dargestelllt ist, verläuft der Teilquerträger 10, 11 bis zum Längsträger 3, 4 und ist mit diesem verbunden. Zwischen dem inneren Schweller 6, 7 und dem Längsträger 3, 4 ist ein Teilstück 10a, 11a des Querträgers 10, 11 angeordnet. Bei einem Seitenaufprall in Pfeilrichtung Z auf das Fahrzeug wird das außenliegende Stützrohr (8) gegen mindestens einen Abstützbock (25) gedrückt, der stirnseitig zum Sitzquerträger (2) gehalten ist. Der Aufprallstoß wird vom Teilquerträger (10, 11) derart aufgenommen, daß eine Verformung des Verbindungselementes 12 zwischen den Ebenen x-x stattfindet mit anschließender Blockbildung der Lagerkonsole 23 zu den aufragenden Verstärkungsblechen 16, 17. Die Teilstücke 10a, 11a des Sitzquerträgers werden bei einem Aufprallstoß stärker deformiert als der Querträger 10, 11 selbst. Die Reihenfolge der Deformation der Plattform im Bereich des Sitzquerträgers bei einem Seitenaufprall erfolgt in der Weise, daß zuerst der Stützbock 25 im Schwellerbereich des Fahrzeugs, anschließend das Verbindungselement 12 und nachfolgend die Teilquerträger 10, 11 und /oder die Teilstücke 10a, 11a zur Absorption von Stoßenergie beaufschlagbar sind. Es können sich auch Deformationen der Bauteile der Plattform überlagern. Der gegenüberliegende Teilquerträger bleibt weitestgehend unverformt.

## Patentansprüche

1. Fahrzeug mit wenigstens einer aus Längs- und Querträgern sowie einem Mitteltunnel und Seitenschwellern bestehenden Plattform, **dadurch gekennzeichnet, daß** ein Sitzquerträger (2) der Plattform aus zwei profilierten Teilquerträgern (10, 11) besteht, die zumindest endseitig an den Längsträgern (3, 4) befestigt und im Bereich des Mitteltunnels (5) einen Abstand zueinander aufweisen und die einerseits über mindestens ein Verbindungselement (12) und andererseits über den Mitteltunnel (5) miteinander zu einer Trägereinheit verbunden sind.

2. Fahrzeug nach Anspruch 1, **dadurch gekennzeichnet, daß** das Verbindungselement (12) an einer Unterseite der Teilquerträger (10, 11) angeordnet und über Befestigungsmittel (18) mit den freien gegenüberstehenden Enden dieser Teilquerträger (10, 11) verbunden ist.

3. Fahrzeug nach Anspruch 1, **dadurch gekennzeichnet, daß** das Verbindungselement (12) eine Konsole (23) für ein Lager (24) einer Antriebswelle trägt und diese Konsole (23), in einen Freiraum (R) zwischen den mit dem Abstand (a) zueinander gehaltenen Teilquerträgern (10, 11) im Mitteltunnel (5) angeordnet ist.

4. Fahrzeug nach den Ansprüchen 1, 2 oder 3, **dadurch gekennzeichnet, daß** mit den Teilquerträgern (10, 11) und dem Verbindungselement (12) jeweils ein hochragendes, profiliertes Verstärkungsblech (16, 17) verbunden ist, die zwischen sich die Lagerkonsole (23) aufweisen und daß die Verstärkungsbleche (16, 17) über fußseitige Abstellungen (19, 20) auf den Teilquerträgern (10, 11) gehalten und abwinkelte aufrechten Schenkel (21) der Verstärkungsbleche (16,17) an einem Tunnelprofil (14) befestigt sind.

5. Fahrzeug nach einem oder mehreren der vorhergehenden Ansprüche, **dadurch gekennzeichnet, daß** das an der Unterseite der Teilquerträger (10). (11) angeordnete Verbindungselement (12) über Befestigungsmittel (18) mit diesen Trägern derart verbunden ist, daß zwischen den Teilquerträgern (10, 11) ein gezielter Verformungs- bzw. Biegebereich bei einem Seitenaufprall gebildet wird, der in einem Abschnitt zwischen den Ebenen (x-x) liegt.

6. Fahrzeug nach einem oder mehreren der vorhergehenden Ansprüche, **dadurch gekennzeichnet, daß** die Reihenfolge der Deformation der Plattform derart bei einem Seitenaufprall vorgesehen ist, daß in Folge zuerst der Stützbock (25) im Schwellerbereich des Fahrzeugs, anschließend das Verbindungselement (12) und nachfolgend die Teilquerträger (10, 11) und/oder Teilstücke zwischen den Längsträgern und dem Schweller teil (6) (10a, 11a) zur Absorption von Stoßenergie beaufschlagbar sind.

7. Fahrzeug mit wenigstens einer aus Längs- und Querträgern sowie einem Mitteltunnel und Seitenschwellern bestehenden Plattform, **dadurch gekennzeichnet, daß** ein Sitzquerträger der Plattform aus zwei profilierten Teilquerträgern (10, 11) besteht, die zumindest endseitig an den Längsträgern (3, 4) befestigt und im Bereich des Mitteltunnels (5) einen Abstand (a) zueinander aufweisen und die einerseits über mindestens ein Verbindungselement (12) und andererseits über den Mitteltunnel (5) miteinander zu einer Trägereinheit verbunden sind, und daß der Sitzquerträger (2) jeweils mit seinem einen äußeren Ende am Längsträger (3, 4) befestigt und zwischen diesem und einem inneren Schwellerteil (6) in Form von Teilstücken (10a,11a) fortgeführt ist, und am Schwellerteil (6) ein Stützbock (25) stirnseitig zum Sitzquerträger (2) angeordnet ist, dem ein Stützrohr (8) unmittelbar gegenübersteht, das in einem Schweller des Fahrzeugaufbaus gehalten ist.

## Claims

1. A vehicle having at least one platform comprising longitudinal and cross beams and a centre tunnel and side sills, **characterised in that** a seat cross beam (2) of the platform comprises two profiled part-cross beams (10, 11) which are fixed at least at their ends to the longitudinal beams (3, 4) and are spaced apart in the region of the centre tunnel (5) and which are connected to one another to form a beam unit, on one side by means of at least one connecting element (12) and on the other side by means of the centre tunnel (5).

2. A vehicle according to claim 1, **characterised in that** the connecting element (12) is arranged on an underside of the part-cross beams (10, 11) and is connected by fixing means (18) to the free, opposing ends of these part-cross beams (10, 11).

3. A vehicle according to claim 1, **characterised in that** the connecting element (12) carries a bracket (23) for a bearing (24) of a drive shaft, and this bracket (23) is arranged in the centre tunnel (5) in a gap (R) between the part-cross beams (10, 11), which are held spaced apart by the amount (a).

4. A vehicle according to claim 1, 2 or 3, **characterised in that** a respective upwardly extending, profiled reinforcing plate (16, 17) is connected to the part-cross beams (10, 11) and the connecting element (12), between which reinforcing plates (16, 17) the bearing bracket (23) is located, and **in that** the reinforcing plates (16, 17) are held on the part-cross beams (10, 11) by means of base extensions (19, 20), and angled, upright arms (21) of the reinforcing plates (16, 17) are fixed to a tunnel profile (14).

5. A vehicle according to one or more of the preceding claims, **characterised in that** the connecting element (12), which is arranged on the underside of the part-cross beams (10, 11), is connected to these beams by fixing means (18) in such a way that a specific deformation or bending zone is formed between the part-cross beams (10, 11) in the event of a side impact and lies in a region between the planes (x-x).

6. A vehicle according to one or more of the preceding claims, **characterised in that** the deformation sequence of the platform in the event of a side impact is such that, in order, first the supporting framework (25) in the sill region of the vehicle, then the connecting element (12) and subsequently the part-cross beams (10, 11) and/or sub-sections (10a, 11a) between the longitudinal beams and the sill part (6) can be acted upon for absorption of the impact energy.

7. A vehicle having at least one platform comprising longitudinal and cross beams and a centre tunnel and side sills, **characterised in that** a seat cross beam of the platform comprises two profiled part-cross beams (10, 11) which are fixed at least at their ends to the longitudinal beams (3, 4) and are spaced apart in the region of the centre tunnel (5) by an amount (a) and which are connected to one another to form a beam unit, on one side by means of at least one connecting element (12) and on the other side by means of the centre tunnel (5), and **in that** the seat cross beam (2) is fixed by its outer ends to the longitudinal beams (3, 4) and continues in the form of sub-sections (10a, 11a) between said longitudinal beams (3, 4) and an inner sill part (6), and a supporting framework (25) is arranged on the sill part (6) at the end of the seat cross beam (2) and lies directly opposite a supporting tube (8) held in a sill of the vehicle body.

## Revendications

1. Véhicule comportant au moins une plate-forme constituée de poutres longitudinales et de poutres transversales ainsi qu'un tunnel central et des seuils latéraux, **caractérisé en ce qu'**une poutre transversale de siège (2) de la plate-forme est constituée de deux poutres transversales partielles (10, 11) profilées qui sont fixées au moins côté extrémité sur les poutres longitudinales (3, 4) et présentent un écartement dans la zone du tunnel central (5) et qui sont reliées entre elles en une unité de poutres d'une part par au moins un élément de liaison (12) et d'autre part par le tunnel central (5).

2. Véhicule selon la revendication 1, **caractérisé en ce que** l'élément de liaison (12) est disposé sur un côté inférieur des poutres transversales partielles (10, 11) et est relié, par des moyens de fixation (18), aux extrémités libres opposées de ces poutres transversales partielles (10, 11).

3. Véhicule selon la revendication 1, **caractérisé en ce que** l'élément de liaison (12) porte une console (23) pour un palier (24) d'un arbre moteur et cette console (23) est disposée dans le tunnel central (5), dans un espace libre (R) entre les poutres transversales partielles (10, 11) maintenues à distance (a) l'une de l'autre.

4. Véhicule selon les revendications 1, 2 ou 3, **caractérisé en ce qu'**aux poutres transversales partielles (10, 11) et à l'élément de liaison (12) est reliée une tôle de renfort (16, 17) profilée respective, dirigée vers le haut, lesquelles présentent entre elles la console d'appui (23), et **en ce que** les tôles de renfort (16, 17) sont maintenues sur les poutres transversales partielles (10, 11) par des pattes (19, 20) côté pied, et des côtés (21) verticaux coudés des tôles de renfort (16, 17) sont fixés sur un profilé de tunnel (14).

5. Véhicule selon une ou plusieurs des revendications précédentes, **caractérisé en ce que** l'élément de liaison (12), disposé sur le côté inférieur des poutres transversales partielles (10, 11), est relié à ces poutres, par des moyens de fixation (18), de manière à former entre les poutres transversales partielles (10, 11), une zone de déformation ou de flexion voulue en cas de collision latérale, qui se situe dans un segment entre les plans (x-x).

6. Véhicule selon une ou plusieurs des revendications précédentes, **caractérisé en ce que** la séquence de la déformation de la plate-forme est prévue en cas de collision latérale de manière que puissent être sollicités, dans l'ordre, d'abord le support d'appui (25) dans la zone des seuils du véhicule, puis l'élément de liaison (12) et ensuite les poutres transversales partielles (10, 11) et/ou des pièces partielles (10a, 11a) entre les poutres longitudinales et l'élément de seuil (6), pour absorber l'énergie de l'impact.

7. Véhicule comportant au moins une plate-forme constituée de poutres longitudinales et de poutres transversales ainsi qu'un tunnel central et des seuils latéraux, **caractérisé en ce qu'**une poutre transversale de siège de la plate-forme est constituée de deux poutres transversales partielles (10, 11) profilées qui sont fixées au moins côté extrémité sur les poutres longitudinales (3, 4) et présentent un écartement (a) dans la zone du tunnel central (5), et qui sont reliées entre elles en une unité de poutres d'une part par au moins un élément de liaison (12) et d'autre part par le tunnel central (5), et **en ce que** la poutre transversale de siège (2) est fixée respectivement par son extrémité extérieure sur la poutre longitudinale (3, 4) et est prolongée, entre celle-ci et un élément de seuil (6) intérieur, sous la forme de pièces partielles (10a, 11a), et sur l'élément de seuil (6) est disposé un support d'appui (25) sur le côté frontal par rapport à la poutre transversale de siège (2), auquel fait face directement un tube d'appui (8) qui est maintenu dans un seuil de la carrosserie du véhicule.
